# EUROPEAN PATENT APPLICATION

(11) **EP 1 431 091 A1**
(43) Date of publication of application: **23.06.2004**
(21) Application number: 01970202.6
(22) Date of filing: 25.09.2001
(51) Int. Cl.: B60J 1/02

(54) **WINDOW GLASS FOR AUTOMOBILE AND METHOD FOR PRODUCTION THEREOF**

(71) Applicant: Hori Glass Co., Ltd., Atsugi-shi, Kanagawa 243-0801 (JP)
(72) Inventor: KAWASE, Toyoo, HORI GLASS Co., Ltd, Atsugi-shi, Kanagawa 243-0801 (JP); MIYAZAWA, Kiyotaka, HORI GLASS Co., Ltd, Atsugi-shi, Kanagawa 243-0801 (JP); TAKEUCHI, Kazuhiko, HORI GLASS Co., Ltd, Atsugi-shi, Kanagawa 243-0801 (JP); ICHINOHE, Kazuhiro, HORI GLASS Co., Ltd, Atsugi-shi, Kanagawa 243-0801 (JP); TAKAHASHI, Hajime, HORI GLASS Co., Ltd, Atsugi-shi, Kanagawa 243-0801 (JP); SUZUKI, Nobuhiko, HORI GLASS Co., Ltd, Atsugi-shi, Kanagawa 243-0801 (JP)
(74) Representative: Wiebusch, Manfred
(86) International application number: PCT/JP2001/008306
(87) International publication number: WO 2003/026909

(57) **Abstract**

A vehicle window glass is bonded by a one-liquid type urethane adhesive containing a silane coupling agent to a glass holder formed from one resin from the following group: natural grade polybutylene terephthalate resin, natural grade polyethylene terephthalate resin, natural grade polybutylene terephthalate resin containing glass fibers, natural grade polyethylene terephthalate resin containing glass fibers, natural grade polyamide resin and natural grade polyamide rein containing glass fibers.

## Description

### Technical Field

The present invention relates to a window glass used for vehicles and a method of producing the same, with special focus on the processes and materials relating to a glass holder and adhesion of said window glass.

### Background Art

A method of using adhesive and a glass holder as a way of putting together vehicle window glass are already widely known.

This process involves the retention faculty of the glass holder with glass fiber combining the use of polyacetal resin, polybutylene terephthalate or aliphatic acid nylon resin. However, these resins, in particular the nylon resin, are prone to adhesion difficulties and lack the properties of an instant adhesive. This situation means that a resin-based bond between the glass and the glass holder requires that the glass itself and/or the glass holder is initially coated with a primer consisting of a silane coupling agent dissolved into an organic solvent such as alcohol. Only once said coating is sufficiently dry is the unit further bonded with a urethane sealant.

In this fashion, a primer is necessary for secure adhesion between vehicle window glass and the glass holder.

In addition to the coating process, the drying process and the testing process that using a primer entails, primer facilities and the administration of the primer itself are also required. To increase the bonding power of the primer, it has been shown that the adhesion period has to be lengthened in addition to the precise positioning of the glass holder as an essential part of the whole process. All of these factors contribute to the increased cost of this method of adhesion.

Moreover, the pungent by-product vapour that is released during the primer coating process contributes to a lessening of efficiency of said process within the facility due to a worsening of the quality of the working environment.

### Disclosure of Invention

An object of the present invention is to provide a window glass and a method of producing the same capable of a curtailment of the primer process, reductions in manufacturing costs while dramatically increasing the adhesive properties, a reduction in the number and size of parts.

There is provided a vehicle window glass comprising a vehicle window glass, a glass holder made by a resin material selected from groups of a resin of a natural grade polybutylene terephthalate resin, a resin of a natural grade polyethylene terephthalate resin, a resin containing glass fibers in a natural grade polybutylene terephthalate resin, a resin containing glass fibers in a natural grade polyethylene terephthalate resin, a resin of a natural grade polyamide resin or a resin containing glass fibers in a natural grade polyamide resin, and one-liquid type urethane adhesive layer containing a silane coupling agent formed between the vehicle window glass and the glass holder.

Also, there is provided a method of producing a vehicle window glass comprising providing a window glass, providing a glass holder made by a resin material selected from groups of a resin of a natural grade polybutylene terephthalate resin, a resin of a natural grade polyethylene terephthalate resin, a resin containing glass fibers in a natural grade polybutylene terephthalate resin, a resin containing glass fibers in a natural grade polyethylene terephthalate resin, a resin of a natural grade polyamide resin or a resin containing glass fibers in a natural grade polyamide resin, providing a one-liquid type urethane adhesive layer containing a silane coupling agent, and adhering the window glass to the glass holder using the adhesive.

In the method of producing a vehicle window glass, preferably further comprising spraying water on at least one of the window glass and the glass holder prior to adhering the window glass to the glass holder using the adhesive, or passing the window glass and the glass holder though a high-humidity atmosphere prior to adhering the window glass to the glass holder using the adhesive.

In the present invention, the window glass and the one-liquid type urethane adhesive containing the silane coupling agent shall be bonded using the process detailed below.

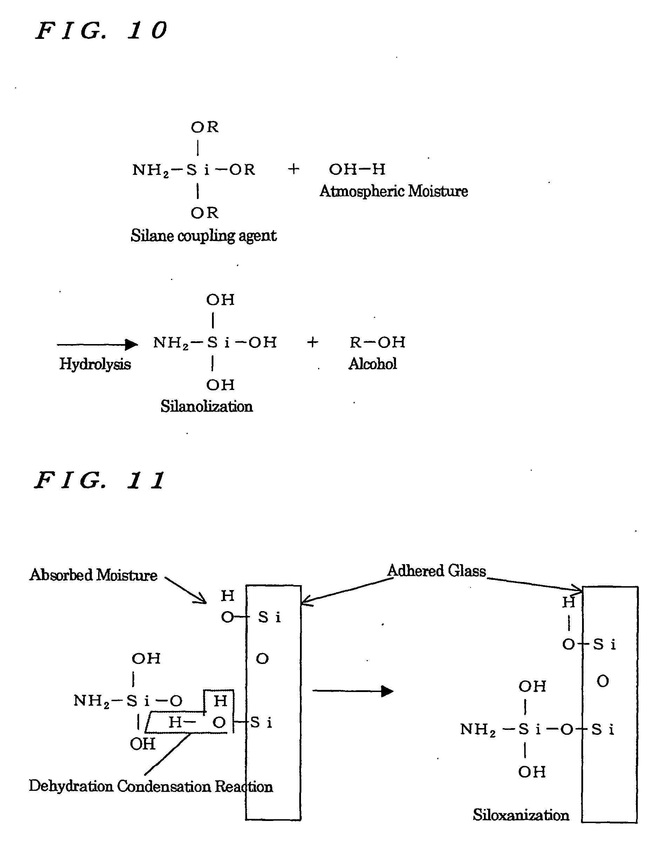

Namely, this process shall entail the bonding of the one-liquid type urethane adhesive containing a silane coupling agent, as shown in Fig. 10, which is completed when the organic functional group X (for example, NH₂) and a silicon atom (Si) extends to alkoxy-group (OR). Contact with the atmospheric moisture (OH-H) results in hydrolytic dissociation and silanolization whereby alcohol is generated and discharged in course.

The silane coupling agent, having undergone the silanolization process, will absorb water in the location where it comes into contact with the glass due to a dehydrating condensation reaction, as shown in Fig. 11. Said water will evaporate into the atmosphere. The glass and the silane coupling agent will thereby form a solid siloxane bond.

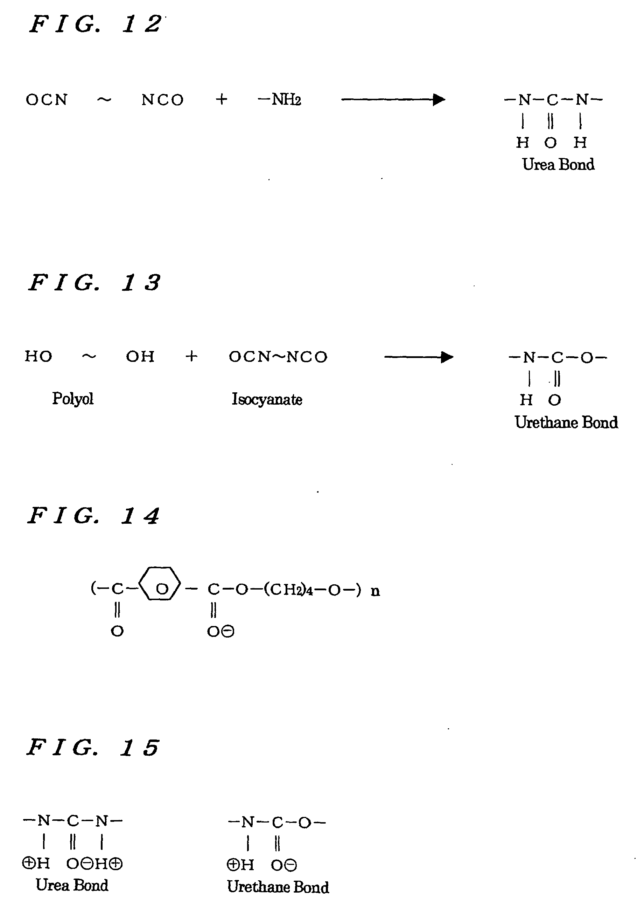

With regard to this process, the NH₂ group that forms the end section of the silane coupling agent, as shown in Fig. 12, will react with the isocyanate (OCN-NCO) with its urethane end. The silane coupling agent will be bonded by urea secreted by the aforementioned urethane.

Moreover, the one-liquid type urethane primer, as shown in Fig. 13, will react with the OH group polyol and the isocyanate (OCN-NCO) to form a urethane bond. Through these reactions and processes, the bond between the glass, the silane coupling agent - the one-liquid type urethane primer or the urethane adhesive - is further solidified.

Next is an explanation of the bonding mechanism between the polybutylene terephthalate resin or the polyethylene terephthalate resin and the urethane adhesive. This explanation shall take the form of an analysis of the chemical reaction and its related formula. Note that this explanation uses polybutylene terephthalate, however polyethylene terephthalate also has the same working mechanism

Polybutylene terephthalate, as described in the chemical structure formula shown in Fig. 14, uses a strongly polarized ester group (-COO). The ester combination consists of a group of negatively charged aspirated atoms.

On the other hand, the above adhesion reactions caused by urea bonding from the urethane adhesive or by the NH bonding part of the urethane bonding reaction are both described as per Fig. 15. Bonding of this nature consists of a group of positively charged electrons.

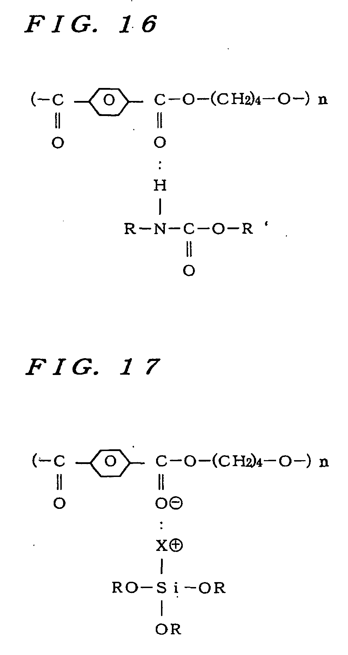

Therefore, as shown in Fig. 16, within the bonding reaction between polybutylene terephthalate resin and urethane adhesive, there is a transfer of electrons that strengthens the bond. Moreover, as shown in Fig. 17, the urethane sealant is added to the silane coupling agent and the resulting reaction by organic functional group X creates an even stronger bond.

In this fashion, a firm bond is formed between the glass and the polybutylene terephthalate through the one-liquid type urethane primer or urethane containing the adhesive silane coupling agent.

Furthermore, examination of the chemical reaction of the bonding properties between the polyamide fiber and the urethane adhesive yields the following results. Our example is based upon examination of Nylon 6, one of the most representative compounds in this field - the following explanation also holds true for all other members of the polyamide resin group.

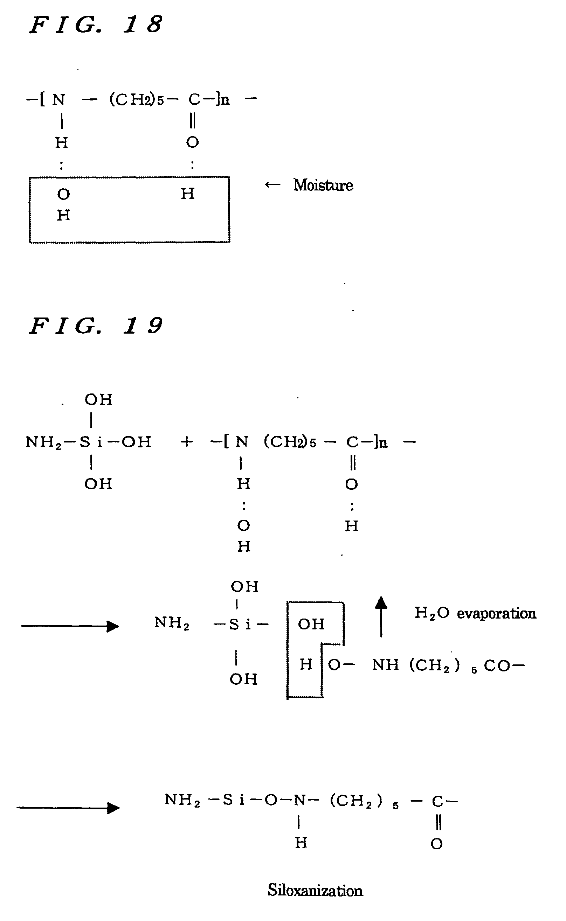

Nylon 6, with a structural formula as shown in Fig. 18, displays the properties of a strongly polarized firm amide bond (-CONH-). The amide, when in contact with the atmosphere, will extract moisture from the air or can also be artificially provided with H₂O. Either way, a hydrogen bond results.

Nylon 6, with its NH group and its OH group that has now bonded with said hydrogen, forms a dehydrating condensation reaction with the silane coupling agent that has also undergone the silanolization process. This mechanism is described in Fig. 19, where it is clearly shown that any water present eventually evaporates off into the atmosphere. In this fashion, Nylon 6 and the silane coupling agent are thereby fixed together by a firm siloxane bond.

In this fashion, a firm bond is formed between the glass and the polyamide resin through the one-liquid type urethane adhesive containing the silane coupling agent.

### Brief Description of Drawings

Fig. 1 is a Cross-sectional view of the relevant area showing the invention with relation to the adhesion between the vehicle window glass and the glass holder;
Fig. 2 is a Cross-sectional view of the relevant area (different perspective) showing the invention with relation to the adhesion between the vehicle window glass and the glass holder;
Fig. 3 is a Cross-sectional view of the relevant area (another different perspective) showing the invention with relation to the adhesion between the vehicle window glass and the glass holder;
Fig. 4 is a Cross-sectional view of the relevant area (another different perspective) showing the invention with relation to the adhesion between the vehicle window glass and the glass holder;
Fig. 5 is a Cross-sectional view of the relevant area (another different perspective) showing the invention with relation to the adhesion between the vehicle window glass and the glass holder;
Fig. 6 is a Cross-sectional view of the relevant area (another different perspective) showing the invention with relation to the adhesion between the vehicle window glass and the glass holder;
Fig. 7 is a Cross-sectional view of the relevant area (another different perspective) showing the invention with relation to the adhesion between the vehicle window glass and the glass holder;
Fig. 8 is a Cross-sectional view of the relevant area (another different perspective) showing the invention with relation to the adhesion between the vehicle window glass and the glass holder;
Fig. 9 is a Cross-sectional view of the relevant area (another different perspective) showing the invention with relation to the adhesion between the vehicle window glass and the glass holder;
Fig. 10 through to Fig. 19 are explanations of the adhesive mechanism of the invention through chemical formulae and schematics of the chemical reactions involved;
Fig. 20 is a graph illustrating the adhesive strength of the bonds formed by the invention.

### Best Mode For Carrying Out the invention

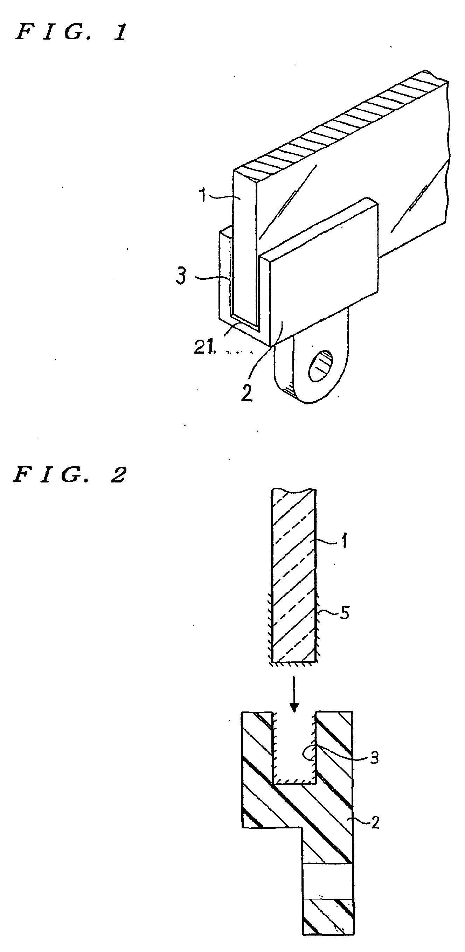

Fig. 1, an oblique perspective, illustrates the explanation of how the invention relates to both the vehicle window glass and the glass holder.

As illustrated, the vehicle window glass 1 matches the shape of the glass holder 2 fitting neatly into the recessed area 21 (there is also an adhesive face 21). The snug fit together with adhesive 3 ensure a good, solid bond between all units.

Glass holder 2 is a compound structure made up of natural grade polybutylene terephthalate resin or natural grade polybutylene terephthalate resin containing glass fiber, both of which contain the strongly polarized COO group.

This glass holder can also be formed from natural grade natural grade polyethylene terephthalate resin or natural grade polyethylene terephthalate resin containing glass fiber, both of which also contain the strongly polarized COO group.

Finally, the glass holder may also be formed from natural grade polyamide resin or natural grade polyamide resin containing glass fiber, both of which also hail from the strongly polarized COO group.

Adhesive 3 refers to the one-liquid type urethane adhesive containing a silane coupling agent.

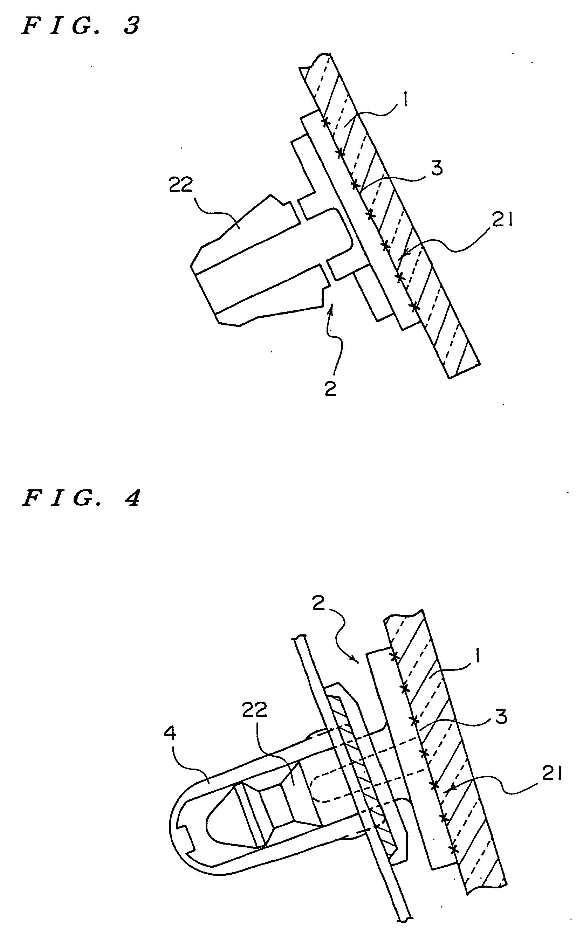

Fig. 3 through Fig. 9 are cross-sectional diagrams of various areas of the invention during its application.

Glass holder 2, as shown in Fig. 3, is a resin-based product specifically designed to strengthen the bond between the car body and the vehicle side window glass/back door window glass. Vehicle window glass 1, adhesive face 21 and the body of the vehicle (for example a hole) meet at engaging point 22. Glass holder 2, in this case, works as a clip.

Fig. 4 shows glass holder 2 in the same positional relationship with vehicle window glass 1, adhesive face 21 and engaging point 22 as shown in Fig. 1. However, engaging point 22 on the automotive body is not directly engaged with the body section hole (as shown in Fig. 3) but instead forms part of sleeve 4, which has been added to the automotive body. Sleeve 4 would, for example, need to form appropriate connections with the locating pins on the vehicle window glass.

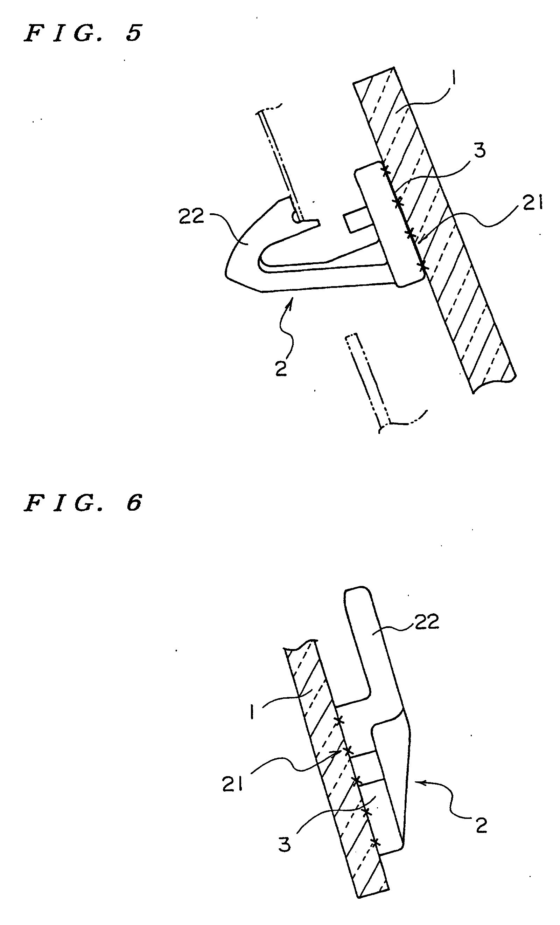

Glass holder 2, as shown in Fig. 5, is again in the same positional relationship with vehicle window glass 1, adhesive face 21 and engaging point 22 as shown in Fig. 3. However on this occasion the shape of engaging point 22 is different. In this example, this arrangement would be most suitable for using engaging point 22 as a locking clip to fix the position of the vehicle window glass in relation to the body.

Fig. 6 shows glass holder 2 again in the same positional relationship with vehicle window glass 1, adhesive face 21 and engaging point 22 as shown in Fig. 3. The difference this time relates to the sash-less type of side window. Vehicle window glass 1 is prevented from failing in the direction of the exterior of the vehicle, which is the tendency due to the air pressure maintained inside the vehicle body shell, by the engaging point 22 which acts as a bracket to prevent the vehicle window glass from such a drastic failure.

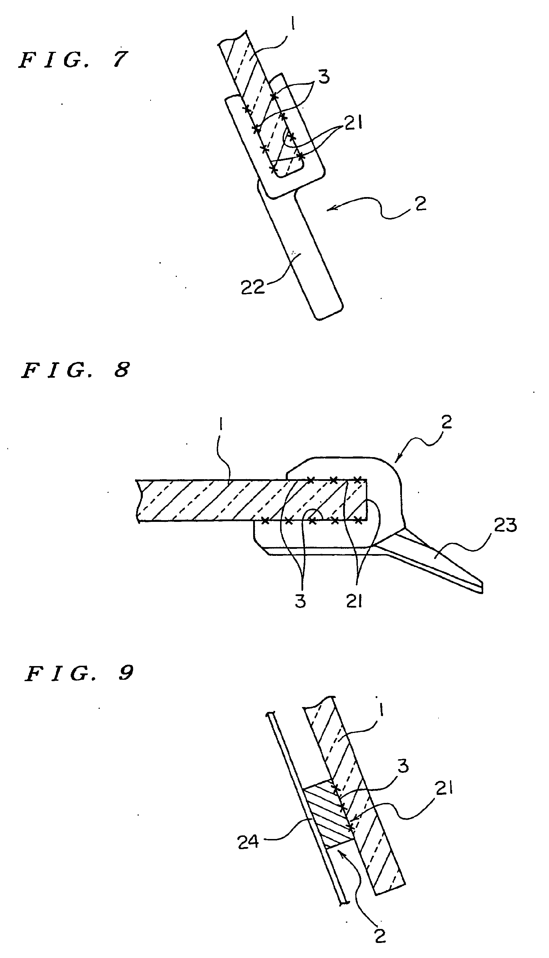

Fig. 7 shows glass holder 2 and an elevation of the door. Vehicle window glass 1 is held in place on its bottom edge by the aforementioned recess and by adhesive face 21. It is also apparent that the automotive body and engaging point 22 have been co-joined in this elevation.

For glass holder 2 shown in Fig. 8, the space between the side rear window and the side center window is concealed using a braid, etc. In this case, vehicle window glass 1 and adhesive face 21 relate to the aforementioned side rear window and side center window through a join at a location identified as lip 23.

Fig. 9 shows the relationship between glass holder 2 and a spacer, which is designed to prevent downward slippage and/or failure of the vehicle window glass. The spacer fixes the window along its entire perimeter. In this case, vehicle window glass 1 is cojoined to the vehicle body at adhesion face 24.

Thus Fig. 1 and Fig. 3 through Fig. 9 illustrate how glass holder 2 falls completely within the general concept of the role of a glass holder as appropriate to the invention. Although the individual functions of all the types of glass holder 2 as described above are all distinct, the points where glass holder 2 retains vehicle window glass 1 are all the same. In this sense, this item is referred to as a glass holder.

### Glass Holder: PBT resin or PET resin

The following will explain, from the perspective of the chemical reactions, the adhesion process of PBT resin-based or PET resin-based glass holders to vehicle window glass using the one-liquid type urethane adhesive containing a silane coupling agent.

Firstly, the bonding process between the glass and the one-liquid type urethane adhesive containing a silane coupling agent is as follows:

This process, as shown in Fig. 10, shall entail the bonding of the one-liquid type urethane adhesive containing a silane coupling agent. This bonding is completed when the organic functional group X (for example, NH₂) and a silicon atom (Si) extends to alkoxy-group (OR). Contact with the atmospheric moisture (OH-H) results in hydrolytic dissociation and silanolization whereby alcohol is generated and discharged in course.

The silane coupling agent, having undergone the silanolization process, will, in the location where it comes into contact with the glass, absorb water due to a dehydrating condensation reaction, as shown in Fig. 11. Said water will evaporate into the atmosphere. The glass and the silane coupling agent will thereby form a solid siloxane bond.

With regard to this process, the NH₂ group that forms the end section of the silane coupling agent, as shown in Fig. 12, will react with the isocyanate (OCN-NCO) with its urethane end. The silane coupling agent will be bonded by urea secreted by the aforementioned urethane.

Moreover, the one-liquid type urethane primer, as shown in Fig. 13, will react with the OH group polyol and the isocyanate (OCN-NCO) to form a urethane bond. Through these reactions and processes, the bond between the glass and the one-liquid type urethane primer or the urethane adhesive containing the silane coupling agent is further solidified.

Hereinafter follows an explanation of the bonding mechanism between the polybutylene terephthalate or the polybutylene terephthalate resin and the urethane adhesive. This explanation shall be in terms of the chemical reactions involved. Note that this explanation uses polybutylene terephthalate, however polyethylene terephthalate also has the same working mechanism.

Polybutylene terephthalate, as described in the chemical structure formula shown in Fig. 14, uses a strongly polarized ester group (-COO). Ester bonding consists of a group of negatively charged aspirated atoms.

On the other hand, the above adhesion reactions caused by urea bonding from the urethane adhesive or by the NH bonding part of the urethane bonding reaction are both described as per Fig. 15. Bonding of this nature consists of a group of positively charged electrons.

Therefore, as shown in Fig. 16, within the bonding reaction between polybutylene terephthalate resin and urethane adhesive, there is a transfer of electrons that strengthens the bond. Moreover, as shown in Fig. 17, the urethane sealant is added to the silane coupling agent and the resulting reaction by organic functional group X creates an even stronger bond.

In this fashion, a firm bonds form between the glass and the polybutylene terephthalate through the one-component urethane primer or urethane adhesive containing the silane coupling agent.

### Polyamide resin-based Glass Holder

Furthermore, examination of the chemical reaction of the bonding properties between the polyamide resin and the urethane adhesive yields the following results. Our example is based upon examination of Nylon 6, one of the most representative compounds in this field - the following explanation also holds true for all other members of the polyamide resin group.

Nylon 6, with a structural formula as shown in Fig. 18, displays the properties of a firm amide bond (-CONH-) with strong polarity. The amide, when in contact with the atmosphere, will extract moisture from the air or can also be artificially provided with H₂O. Either way, a hydrogen bond results.

Nylon 6, with its NH group and its OH group, which has now bonded with said hydrogen, forms a dehydrating condensation reaction with the silane coupling agent that has also undergone the silanolization process. This mechanism is described in Fig. 19, where it is clearly shown that any water present eventually evaporates off into the atmosphere. In this fashion, Nylon 6 and the silane coupling agent are thereby fixed together by a firm siloxane bond.

In this fashion, a firm bond is formed between the glass and the polyamide fiber through the one-component urethane adhesive containing the silane coupling agent.

### Water-spray processing or high-humidity processing

As shown in Fig. 10, when bonding with the vehicle window glass, the one-liquid type urethane adhesive containing the silane coupling agent undergoes a hydrolysis reaction that absorbs water from the moisture content of the surrounding atmosphere. After the silanolization process, the silane coupling agent undergoes a further dehydrating condensation reaction as part of the siloxane process. The glass and the silane coupling agent will thereby form a solid siloxane bond. Therefore, when vehicle window glass 1 and glass holder 2 are bonded together, as shown in Fig. 2, one part (for example, glass holder 2 and adhesive face 21) is coated with a layer of urethane adhesive 3, and the other part (for example, the adhesive face of vehicle window glass 1) is sprayed with water 5. The water 5 spray process may be replaced in turn by passage through a high-humidity atmosphere in a controlled climate.

After this preparation, with the bonding of vehicle window glass 1 and glass holder 2, and the next step involves hydration, dissolution and dehydrating condensation reactions. Only a short period of drying is required to form a very solid bond between the aforementioned items.

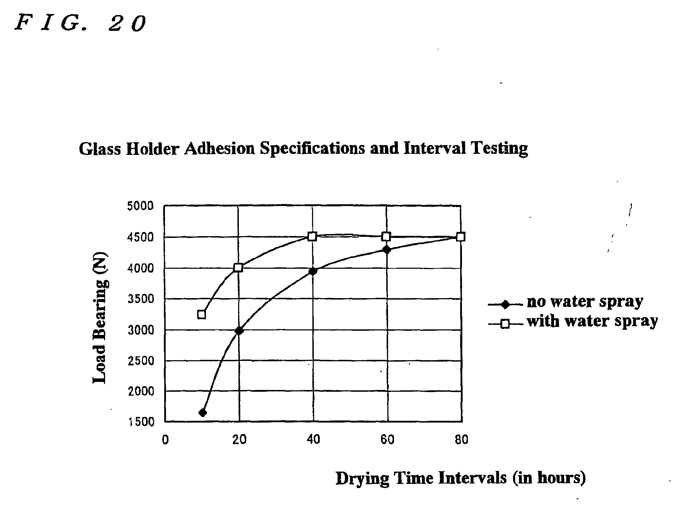

Fig. 20 shows vehicle window glass 1, after undergoing the water spray process, co-joined with glass holder 2. This amalgam then undergoes drying periods of 10, 20, 40, 60 and 80 hours respectively. These 5 samples, each with a distinct drying time, are then tested for the relative strengths of their bonds. All pass the acceptable criteria value for certification. There is also evidence that even without the water spray process, the bond shows sufficient adhesive properties. The test results indicate that the strongest bond was formed when a relatively short drying was applied (in this case: 40 hours) to items that had undergone the water spray process. Therefore, the current drying times can be shortened, and vehicle window glass productivity can be increased accordingly.

## Claims

1. A vehicle window glass comprising:
a vehicle window glass,
a glass holder made by a resin material selected from groups of a resin of a natural grade polybutylene terephthalate resin, a resin of a natural grade polyethylene terephthalate resin, a resin containing glass fibers in a natural grade polybutylene terephthalate resin, a resin containing glass fibers in a natural grade polyethylene terephthalate resin, a resin of a natural grade polyamide resin or a resin containing glass fibers in a natural grade polyamide resin, and
one-liquid type urethane adhesive layer containing a silane coupling agent formed between the vehicle window glass and the glass holder.

2. A method of producing a vehicle window glass comprising:
providing a window glass;
providing a glass holder made by a resin material selected from groups of a resin of a natural grade polybutylene terephthalate resin, a resin of a natural grade polyethylene terephthalate resin, a resin containing glass fibers in a natural grade polybutylene terephthalate resin, a resin containing glass fibers in a natural grade polyethylene terephthalate resin, a resin of a natural grade polyamide resin or a resin containing glass fibers in a natural grade polyamide resin;
providing a one-liquid type urethane adhesive layer containing a silane coupling agent; and
adhering the window glass to the glass holder using the adhesive.

3. The method of claim 2, further comprising spraying water on at least one of the window glass and the glass holder prior to adhering the window glass to the glass holder using the adhesive.

4. The method of claim 2, further comprising passing the window glass and the glass holder though a high-humidity atmosphere prior to adhering the window glass to the glass holder using the adhesive.
